# EUROPEAN PATENT APPLICATION

(11) **EP 4 830 920 A1**
(43) Date of publication of application: **28.10.2026**
(21) Application number: 24906975.8
(22) Date of filing: 08.11.2024
(51) Int. Cl.: B32B 29/00, B32B 27/00, B32B 27/10, B65D 65/42, D21H 19/10, D21H 19/82

(54) **BEND-RESISTANCE AGENT AND LAMINATE**

(30) Priority: 20.12.2023 JP 2023214871; 02.05.2024 JP 2024074909
(71) Applicant: Sakata INX Corporation, Osaka-shi, Osaka 541-0047 (JP)
(72) Inventor: ITO, Genta, Osaka-shi, Osaka 541-0047 (JP); TANAKA, Hiroki, Osaka-shi, Osaka 541-0047 (JP); ISHIDA, Kenichiro, Osaka-shi, Osaka 541-0047 (JP); KISHI, Masato, Osaka-shi, Osaka 541-0047 (JP); FUJITA, Atsushi, Osaka-shi, Osaka 541-0047 (JP)
(74) Representative: Boco IP Oy Ab
(86) International application number: PCT/JP2024/039852
(87) International publication number: WO 2025/134587

(57) **Abstract**

Provided are a bending resistance agent, and a laminated body in which various functional layers are provided on a paper base material, for causing less deteriorated functions of a functional layer before and after bending, in the laminated body. The bending resistance agent satisfies the following conditions 1 to 3, in a laminated body in which a paper base material layer, a bending resistance layer, and a functional layer are laminated in this order, for forming the bending resistance layer (excluding a case where the bending resistance agent is OKS-1009 and the functional layer is an active energy ray-curable ink composition layer). (Condition 1) The bending resistance agent comprises resin and a medium, and a content of resin (in terms of solid content) is 70 to 100% by mass in the bending resistance agent. (Condition 2) An elongation degree of the bending resistance layer in a tensile test is 200% or more. (Condition 3) A shape restoration degree of the bending resistance layer is 80% or more.

## Description

### TECHNICAL FIELD

The present invention relates to a bending resistance agent and a laminated body. More specifically, the present invention relates to a bending resistance agent, and a laminated body in which various functional layers are provided on a paper base material, for causing less deteriorated functions of a functional layer before and after bending, in the laminated body.

### BACKGROUND ART

In recent years, in response to environmental concerns and the demands of the SDGs (Sustainable Development Goals), there has been a growing demand for plastic-free and aluminum-free products also in the food field. In response to these demands, a paper-made packaging body imparted with barrier property (moisture resistance) has been considered (for example, Patent Documents 1 to 2).

### PRIOR ART DOCUMENT

### Patent Document

Patent Document 1: JP 2002-220494 A
Patent Document 2: JP 2009-155780 A

### SUMMARY OF THE INVENTION

However, where a packaging material is produced with a paper laminated body described in Patent Documents 1 to 2, there is a problem that a packaging body has deteriorated functions (for example, moisture resistance, etc.) of a functional layer due to bending.

The present invention has been made in view of such a conventional problem, and it is an object of the present invention to provide a bending resistance agent, and a laminated body in which various functional layers are provided on a paper base material, for causing less deteriorated functions of a functional layer before and after bending, in the laminated body.

As a result of intensive studies to solve the above-described problem, the present inventors have found that the above-described problem can be solved by providing a bending resistance layer between a paper base material layer and a functional layer, and completed the present invention.

That is, the bending resistance agent according to one aspect of the present invention that solves the above-described problem is a bending resistance agent that satisfies the following conditions 1 to 3, in a laminated body in which a paper base material layer, a bending resistance layer, and a functional layer are laminated in this order, for forming the bending resistance layer (excluding a case where the bending resistance agent is OKS-1009 and the functional layer is an active energy ray-curable ink composition layer).

### (Condition 1)

The bending resistance agent comprises resin and a medium, and
a content of the resin (in terms of solid content) is 70 to 100% by mass in the bending resistance agent.

### (Condition 2)

An elongation degree of the bending resistance layer in a tensile test, as determined by the following equation, is 200% or more: $Elongation degree \left(%\right) = 100 \times \left(Lb-L0\right) / L 0 ,$ provided that Lb refers to a gauge length at break and L0 refers to a gauge length before the tensile test. The tensile test is a tensile test performed in accordance with JIS K 6251.

### (Condition 3)

A shape restoration degree of the bending resistance layer, as determined by the following equation, is 80% or more: $Shape restoration degree \left(%\right) = 100 \times \left(L1-L2\right) / \left(L1-L0\right) ,$ provided that L0 refers to a gauge length before the tensile test. L1 refers to a gauge length at 100% elongation degree in the tensile test, or a limit gauge length at which the layer does not break if it cannot be elongated to 100%. L2 is a gauge length of the bending resistance layer after an external force is removed following the tensile test, and the tensile test is a tensile test performed in accordance with JIS K 6251.

Moreover, the laminated body according to one aspect of the present invention that solves the above-described problem is a laminated body in which a paper base material layer, a bending resistance layer, and a functional layer are laminated in this order, the bending resistance layer being a layer formed by being imparted with the bending resistance agent.

### EMBODIMENT FOR CARRYING OUT THE INVENTION

### <Bending resistance agent>

The bending resistance agent according to one embodiment of the present invention is a bending resistance agent for forming a bending resistance layer in a laminated body in which a paper base material layer, the bending resistance layer, and a functional layer are laminated in this order, excluding a case where the bending resistance agent is OKS-1009 and the functional layer is an active energy ray-curable ink composition layer. The bending resistance agent satisfies the following conditions 1 to 3. Besides, the bending resistance agent of the present embodiment has only to have a configuration in which the paper base material layer, the bending resistance layer, and the functional layer are laminated in this order, and other layers may be provided before, after, or in between.

### (Condition 1)

The bending resistance agent comprises resin and a medium, and
a content of the resin (in terms of solid content) is 70 to 100% by mass in the bending resistance agent.

### (Condition 2)

An elongation degree of the bending resistance layer in a tensile test, as determined by the following equation, is 200% or more: $Elongation degree \left(%\right) = 100 \times \left(Lb-L0\right) / L 0 ,$ provided that Lb refers to a gauge length at break and L0 refers to a gauge length before the tensile test. The tensile test is a tensile test performed in accordance with JIS K 6251.

### (Condition 3)

A shape restoration degree of the bending resistance layer, as determined by the following equation, is 80% or more: $Shape restoration degree \left(%\right) = 100 \times \left(L1-L2\right) / \left(L1-L0\right) ,$ provided that L0 refers to a gauge length before the tensile test. L1 refers to a gauge length at 100% elongation degree in the tensile test, or a limit gauge length at which the layer does not break if it cannot be elongated to 100%. L2 is a gauge length of the bending resistance layer after an external force is removed following the tensile test, and the tensile test is a tensile test performed in accordance with JIS K 6251. Each component will be described below.

### (Condition 1)

### • Resin

Resin is not particularly limited. By way of an example, resin preferably includes at least one selected from the group consisting of a polyurethane-based resin, an acryl-based resin, a polyester-based resin, a polyvinyl alcohol-based resin, a styrene-butadiene-based resin, a vinyl chloride-based resin, an ethylene-vinyl acetate copolymer-based resin, and a polyolefin-based resin. Resin is preferably an emulsion of a polyurethane-based resin, an acryl-based resin, a styrene-butadiene-based resin, a vinyl chloride-based resin, an ethylene-vinyl acetate copolymer-based resin, or a polyolefin-based resin, from the viewpoints of solid content and viscosity. As a result, the bending resistance agent is applied so as to form a bending resistance layer comprising the above-described resin between a paper base material and a functional layer, in a laminated body in which various functional layers are provided on the paper base material. The obtained laminated body exhibits less deterioration in functions of the functional layer before and after bending.

The polyurethane-based resin is not particularly limited. By way of an example, the polyurethane-based resin includes a polyurethane-based resin obtained by reacting a diisocyanate compound with a diol compound, and optionally with a chain extender or a reaction terminator, and the like.

The diisocyanate compound is not particularly limited. By way of an example, the diisocyanate compound includes: aliphatic diisocyanate compounds such as hexamethylene diisocyanate and 2,2,4-trimethylhexamethylene diisocyanate; alicyclic diisocyanate compounds such as isophorone diisocyanate and hydrogenated xylylene diisocyanate; aromatic diisocyanate compounds such as xylylene diisocyanate, α,α,α',α'-tetramethylxylylene diisocyanate, toluene diisocyanate, and diphenylmethane diisocyanate; and the like.

The diol compound is not particularly limited. By way of an example, the diol compound includes: low-molecular diols such as ethylene glycol, propylene glycol, butylene glycol, diethylene glycol, and triethylene glycol; high-molecular diols such as a polyester diol compound, a polyether diol compound, a polycarbonate diol compound, and a polybutadiene glycol compound; and the like.

Moreover, the polyurethane-based resin may have various types of skeletons. By way of an example, the polyurethane-based resin includes a polyether-based polyurethane resin, a polyester-based polyurethane resin, a polyester-polyether-based polyurethane resin, a polycarbonate-based polyurethane resin, and the like.

The polyester-based resin is not particularly limited. By way of an example, the polyester-based resin can be obtained by esterification reaction using polycarboxylic acid and a polyhydric alcohol as raw material components.

The polycarboxylic acid is not particularly limited. By way of an example, the polycarboxylic acid includes phthalic acid, isophthalic acid, tetrahydrophthalic acid, tetrahydroisophthalic acid, hexahydrophthalic acid, hexahydroterephthalic acid, trimellitic acid, adipic acid, sebacic acid, succinic acid, azelaic acid, fumaric acid, maleic acid, itaconic acid, pyromellitic acid, etc., and acid anhydrides thereof.

The polyhydric alcohol is not particularly limited. By way of an example, the polyhydric alcohol includes glycol and trivalent or higher polyhydric alcohols. Glycol includes, for example, ethylene glycol, propylene glycol, diethylene glycol, triethylene glycol, tetraethylene glycol, dipropylene glycol, polyethylene glycol, polypropylene glycol, neopentyl glycol, hexylene glycol, 1,3-butanediol, 1,4-butanediol, 1,5-pentanediol, 1,6-hexanediol, 2-butyl-2-ethyl-1,3-propanediol, methylpropanediol, cyclohexanedimethanol, 3,3-diethyl-1,5-pentanediol, and the like. Moreover, trivalent or higher polyhydric alcohols include, for example, glycerin, trimethylolethane, trimethylolpropane, pentaerythritol, dipentaerythritol, and the like.

The acryl-based resin is not particularly limited. By way of an example, the acryl-based resin may be, for example, a polyester-modified acrylic resin, a polyurethane-modified acrylic resin, or a copolymer of vinyl versatate and an acryl-based monomer.

The polyvinyl alcohol-based resin is not particularly limited. By way of an example, the polyvinyl alcohol-based resin may be a polyvinyl alcohol, or a derivative or modified product of a polyvinyl alcohol.

The polyvinyl alcohol-based resin preferably has a degree of polymerization of 100 to 5000, and more preferably 500 to 3000. When the degree of polymerization of the polyvinyl alcohol-based resin is within the above-described ranges, the bending resistance agent exhibits excellent coating strength and handling suitability.

A degree of saponification of the polyvinyl alcohol-based resin is preferably 60 mol% or more, and more preferably 75 mol% or more. When the degree of saponification of the polyvinyl alcohol-based resin is within the above-described ranges, the bending resistance agent exhibits excellent coating strength and water resistance.

The derivative of the polyvinyl alcohol includes a derivative of a polyvinyl alcohol in which approximately 40 mol% of hydroxyl groups are acetalized, and the like.

The modified product of the polyvinyl alcohol includes a polyvinyl alcohol modified product obtained by copolymerizing a carboxyl group-containing monomer, an amino group-containing monomer, a sulfone group-containing monomer, an acetoacetyl group-containing monomer, butenediol, and the like.

The polyvinyl alcohol-based resin includes poval, EXCEVAL (manufactured by Kuraray Co., Ltd.), GOHSENOL, Nichigo G-Polyme (manufactured by Mitsubishi Chemical Corporation), and the like.

The styrene-butadiene-based resin is not particularly limited. By way of an example, the styrene-butadiene-based resin is a resin emulsion obtained by emulsion-polymerizing or solution-polymerizing monomer compositions including a styrene-based monomer, butadiene, and, if necessary, other monomers copolymerizable with the styrene-based monomer and butadiene.

The styrene-based monomer includes styrene, α-methylstyrene, β-methylstyrene, 2,4-dimethylstyrene, α-ethylstyrene, α-butylstyrene, 4-methoxystyrene, vinyltoluene, divinylbenzene, and the like.

Other monomers copolymerizable with the styrene-based monomer and butadiene include: an alkyl (meth)acrylate ester monomer such as methyl (meth)acrylate and butyl (meth)acrylate; a vinyl cyanide monomer such as acrylonitrile and methacrylonitrile; an amide group-containing monomer such as (meth)acrylamide and N,N-dimethyl(meth)acrylamide; a hydroxyalkyl (meth)acrylate ester monomer such as 2-hydroxyethyl (meth)acrylate and 2-hydroxypropyl (meth)acrylate; a carboxyl group-containing monomer such as itaconic acid, maleic acid, and (meth)acrylic acid; and the like. A styrene-butadiene-based resin emulsion is preferably a carboxyl (carboxyl group) modified styrene-butadiene-based resin emulsion.

The styrene-butadiene-based resin emulsion has a glass transition temperature of preferably -20°C or higher, and more preferably -10°C or higher, from the viewpoint of improving blocking resistance and leveling property. The glass transition temperature is determined by differential scanning calorimetry (DSC) and is usually calculated as a midpoint of a temperature range in which the glass transition occurs.

The styrene-butadiene-based resin emulsion includes Nippol SX1105A, Nippol LX407S12, Nippol LX435 (manufactured by Zeon Corporation), and the like.

The vinyl chloride-based resin is not particularly limited. By way of an example, the vinyl chloride-based resin includes a vinyl chloride homopolymer, a copolymer of monomers copolymerizable with vinyl chloride, a graft copolymer obtained by graft-copolymerizing vinyl chloride onto a polymer other than the copolymer of monomers copolymerizable with vinyl chloride, and the like. Among these, the vinyl chloride-based resin is preferably a vinyl chloride-based resin or a vinyl chloride-based resin emulsion.

A method of producing a vinyl chloride-based resin is not particularly limited. By way of an example, the vinyl chloride-based resin can be produced by any known method, for example, emulsion polymerization method, suspension polymerization method, solution polymerization method, bulk polymerization method, etc.

The monomer copolymerizable with vinyl chloride constituting the copolymer of monomers copolymerizable with vinyl chloride is not particularly limited, as long as it has a reactive double bond in its molecule. Such a monomer includes: α-olefins such as ethylene, propylene, and butylene; vinyl esters such as vinyl acetate and vinyl propionate; vinyl ethers such as butyl vinyl ether and cetyl vinyl ether; unsaturated carboxylic acids such as acrylic acid and methacrylic acid; esters of acrylic acid or methacrylic acid such as methyl acrylate, ethyl methacrylate, and phenyl methacrylate; aromatic vinyls such as styrene and α-methylstyrene; vinyl halides such as vinylidene chloride and vinyl fluoride; N-substituted maleimides such as N-phenyl maleimide and N-cyclohexyl maleimide; and the like.

A polymer other than a vinyl chloride-based copolymer is not particularly limited, as long as it can graft-copolymerize vinyl chloride.

The vinyl chloride-based resin includes VINYBLAN (manufactured by Nissin Chemical Industry Co., Ltd.), SUMIKAFLEX (manufactured by Sumika Chemtex Co., Ltd.), and the like.

The ethylene-vinyl acetate copolymer-based resin is not particularly limited. By way of an example, the ethylene-vinyl acetate copolymer-based resin is a resin emulsion obtained by emulsion-polymerizing monomer compositions containing ethylene and a vinyl acetate monomer. Then, a mass ratio of ethylene to the vinyl acetate monomer (ethylene/vinyl acetate monomer) to be compounded for copolymerization is preferably 10/90 to 70/30.

The ethylene-vinyl acetate copolymer-based resin includes SUMIKAFLEX (manufactured by Sumika Chemtex Co., Ltd.) and the like.

The polyolefin-based resin is not particularly limited. The polyolefin-based resin is, for example, a resin emulsion obtained by dispersing in water a polyethylene resin, a polypropylene resin, a polybutylene resin, and a polyolefin-based resin in which two or more of ethylene, propylene, and butylene are copolymerized.

Moreover, the polyolefin-based resin may be: a modified polyolefin-based resin in which an amino group, a carboxyl group, a hydroxyl group, an acryloyl group, and other polymer chains are introduced to a polyolefin chain; an oxidized polyolefin-based resin in which a portion of a polyolefin chain is oxidized; a halogenated polyolefin-based resin a portion of which is treated with halogen, or the like.

The polyolefin-based resin includes Arrowbase (manufactured by UNITIKA LTD.), CHEMIPEARL (manufactured by Mitsui Chemicals, Inc.), SUPERCHLON (manufactured by Nippon Paper Industries Co., Ltd.), and the like.

A content of resin in a solid content of the bending resistance agent (in terms of solid content) is not particularly limited. By way of an example, the content of resin in the bending resistance agent has only to be 70% by mass or more, preferably 80% by mass or more. Moreover, the content of resin in the bending resistance agent has only to be 100% by mass or less. When the content of resin is within the above-described ranges, the bending resistance agent can achieve both coating suitability and coating physical properties.

### • Medium

A medium is not particularly limited as long as it satisfies the conditions 1 to 3. By way of an example, if the bending resistance agent is aqueous, the medium may be water alone, or it may be an aqueous medium obtained by mixing water with a water-miscible organic solvent. The water-miscible organic solvent is not particularly limited. By way of an example, the water-miscible organic solvent includes: alcohols such as methanol, ethanol, and propanol; polyhydric alcohols such as ethylene glycol and propylene glycol, and alkyl ether derivatives thereof; esters such as ethyl formate, methyl acetate, and ethyl acetate; ketones such as acetone; and the like.

Moreover, if the bending resistance agent is solvent-soluble, the medium includes: an alcohol-based solvent such as methanol, ethanol, isopropyl alcohol, n-propanol, butanol, isobutanol, and tert-butanol; an aromatic hydrocarbon solvent such as toluene and xylene; an aliphatic hydrocarbon solvent such as hexane, cyclohexane, methylcyclohexane, and ethylcyclohexane; a ketone-based solvent such as acetone, methyl ethyl ketone, methyl isobutyl ketone, and cyclohexanone; an ester-based solvent such as ethyl acetate, n-propyl acetate, isopropyl acetate, butyl acetate, isobutyl acetate, sec-butyl acetate, and tert-butyl acetate; a glycol-based solvent such as ethylene glycol monomethyl ether, ethylene glycol monoethyl ether, ethylene glycol dimethyl ether, ethylene glycol monobutyl ether, propylene glycol monomethyl ether, propylene glycol monoethyl ether, propylene glycol monopropyl ether, and propylene glycol monobutyl ether, and esterified products thereof; and the like. It is preferable that the esterified products are mainly acetated ones, which include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monomethyl ether acetate, propylene glycol monoethyl ether acetate, and the like.

If the bending resistance agent is solvent-soluble, the medium is preferably a mixed solvent of an ester-based organic solvent, an alcohol-based organic solvent, and a ketone-based organic solvent, or a mixed solvent of an ester-based organic solvent and an alcohol-based organic solvent that is more environmentally friendly, etc., from an environmental perspective.

A content of the medium is not particularly limited. By way of an example, the content of the medium is preferably 40% by mass or more, and more preferably 45% by mass or more, in the bending resistance agent. Moreover, the content of the medium is preferably 80% by mass or less in the bending resistance agent. When the content of the medium is within the above-described ranges, the bending resistance agent can be optimized for storage stability, printability, and application amounts.

### • Optional components

The bending resistance agent of the present embodiment may comprise optional components as appropriate in addition to the above-described resin and medium. The optional components are not particularly limited. By way of an example, the optional components include wax, an anti-foaming agent, an inorganic filler, a release agent, a thickener, a surface treatment agent, a surfactant, a plasticizing agent, a polymerization inhibitor, an ultraviolet absorber, a light stabilizer, an antioxidant, and the like.

### (Condition 2)

The bending resistance agent of the present embodiment is a bending resistance agent for forming a bending resistance layer in a laminated body in which a paper base material layer, the bending resistance layer, and a functional layer are laminated in this order.

Regarding the condition 2, an elongation degree of the bending resistance layer obtained using the bending resistance agent of the present embodiment in a tensile test is 200% or more. The elongation degree is expressed by the following equation: $Elongation degree \left(%\right) = 100 \times \left(Lb-L0\right) / L 0 ,$ provided that Lb refers to a gauge length at break and L0 refers to a gauge length before the tensile test. The tensile test is a tensile test performed in accordance with JIS K 6251.

The elongation degree of the bending resistance layer has only to be 200% or more, preferably 250% or more. When the elongation degree of the bending resistance layer is less than 200%, the bending resistance layer has difficulty in maintaining the functions of the functional layer before and after bending the laminated body, and its functions are likely to deteriorate. In the present embodiment, the elongation degree of the bending resistance layer can be measured by the following method.

### • Method of measuring elongation degree of bending resistance layer

A bending resistance agent is applied onto any base material such as glass, dried, and then peeled off to produce a dumbbell-shaped (film thickness: 300 µm) No. 3 test piece in accordance with JIS K 6251, tensile. Next, under the following conditions, an elongation of each test piece when pulled until it breaks is measured using the following tester.
Tensile tester: AGS-X, manufactured by Shimadzu Corporation
Stretching speed: 300 mm/min
Temperature: 23°C
Humidity: 50%

### (Condition 3)

Regarding the condition 3, a shape restoration degree of the bending resistance layer is 80% or more. The shape restoration degree has only to be 80% or more, preferably 90% or more, and more preferably 95% or more. When the shape restoration degree is less than 80%, the bending resistance layer has difficulty in maintaining the functions of the functional layer.

In the present embodiment, the shape restoration degree can be evaluated by conducting a tensile test performed in accordance with JIS K 6251. The tensile test for evaluating the shape restoration degree can be performed under the following conditions using the following tester.

### • Method of evaluating shape restoration degree of bending resistance layer

A bending resistance agent is applied onto any base material such as glass, dried, and then peeled off to form a shape of a test piece. The obtained test piece is used to produce a dumbbell-shaped (film thickness: 300 µm) No. 3 test piece in accordance with JIS K 6251, tensile. Next, under the following conditions, each test piece is extended using the tester described below and held in this state for 5 minutes. The test piece is then removed from the tester, and its length after three hours is measured.
Tensile tester: AGS-X, manufactured by Shimadzu Corporation
   Stretching speed: 50 mm/min
Temperature: 23°C
Humidity: 50%
A shape restoration degree can be determined by the following equation: $Shape restoration degree \left(%\right) = 100 \times \left(L1-L2\right) / \left(L1-L0\right) ,$ provided that L0 refers to a gauge length before the tensile test. L1 refers to a gauge length at 100% elongation degree in the tensile test, or a limit gauge length at which the layer does not break if it cannot be elongated to 100%. L2 is a gauge length of the layer after an external force is removed following the tensile test.

Referring back to the general description of the bending resistance agent, the laminated body with which the bending resistance agent is imparted is a laminated body in which a paper base material layer, a bending resistance layer, and a functional layer are laminated in this order.

### (Paper base material layer)

A paper base material layer is not particularly limited. By way of an example, paper constituting the paper base material layer is not particularly limited. By way of an example, any paper in which a plant-derived pulp is commonly used as a main component may be used, such as bleached or unbleached kraft paper, high-quality paper, paperboard, liner paper, coated paper, one-side glazed paper, glassine paper, and Graphane paper. Among them, paper is preferably paper whose main component is pulp that easily disperses in water due to mechanical disintegration.

A basis weight and a thickness of the paper base material layer are not particularly limited. By way of an example, the basis weight of the paper base material layer is preferably 30 g/m² or more, and more preferably 50 g/m² or more. Moreover, the thickness of the paper base material layer is preferably 300 g/m² or less, and more preferably 250 g/m² or less. When the thickness and the basis weight of the paper base material layer are within the above-described ranges, the bending resistance agent easily maintains the functions of the functional layer.

### (Bending resistance layer)

A bending resistance layer is a layer formed by being imparted with the bending resistance agent of the present embodiment.

A method of imparting the bending resistance agent to the paper base material is not particularly limited. By way of an example, the imparting method includes methods using a blade coater, a bar coater, an air knife coater, a slit die coater, a gravure coater, a gravure reverse coater, a microgravure coater, a gate roll coater, and the like.

The imparted bending resistance agent is dried. A drying method for drying the bending resistance agent is not particularly limited. By way of an example, the drying method can use known drying equipment, such as a hot air dryer, an infrared dryer, a gas burner, and a hot plate.

A thickness of the bending resistance layer is not particularly limited. By way of an example, the thickness of the bending resistance layer is preferably 1 µm or more, and more preferably 3 µm or more. Moreover, the thickness of the bending resistance layer is preferably 30 µm or less, and more preferably 20 µm or less. When the thickness of the bending resistance layer is within the above-described ranges, a laminated body to be obtained has less deteriorated functions of the functional layer before and after bending.

### (Functional layer)

A functional layer is a layer for imparting various functions to the paper base material. The laminated body of the present embodiment comprises a bending resistance layer formed by being imparted with the bending resistance agent described above. As a result, the functions of the laminated body, imparted by the functional layer, are less likely to be impaired before and after bending.

The functional layer is not particularly limited. The functional layer may be selected as appropriate depending on desired applications. Specifically, the functional layer preferably includes at least any layer of a moisture-proof layer, a gas barrier layer, an oil-resistant layer, a water-resistant layer, or a water-repellent layer. As a result, the obtained laminated body has less deteriorated various functions of the functional layer (moisture resistance, gas barrier property, oil resistance, water resistance, or water repellency) before and after bending.

### • Case where functional layer is moisture-proof layer

A moisture-proof layer is provided by being imparted with a moisture-proof coating agent. For example, the moisture-proof coating agent includes an anionic binder resin, an inorganic layered compound, and an aqueous medium.

The anionic binder resin is not particularly limited. By way of an example, the anionic binder resin includes a styrene-butadiene-based copolymer, a styrene-acryl-based copolymer, a methacrylate-butadiene-based copolymer, an acrylonitrile-butadiene-based copolymer, an olefin-unsaturated carboxylic acid-based copolymer, an acrylic ester-based polymer, and the like. Among them, the anionic binder resin is preferably at least one selected from the group consisting of a styrene-butadiene-based copolymer, a styrene-acryl-based copolymer, and an olefin-unsaturated carboxylic acid-based copolymer, and more preferably an olefin-unsaturated carboxylic acid-based copolymer, because it has good water resistance and good elongation, and is less likely to generate cracks of the functional layer due to folding crack.

The styrene-butadiene-based copolymer is a copolymer obtained by emulsion-polymerizing an aromatic vinyl compound such as styrene, α-methylstyrene, vinyltoluene, p-t-butylstyrene, and chlorostyrene, a conjugated diene compound such as 1,3-butadiene, isoprene, 2,3-dimethyl-1,3-butadiene, and 1,3-pentadiene, and a monomer consisting of other compounds copolymerizable with them. The aromatic vinyl compound is preferably styrene or the like. The conjugated diene compound is preferably 1,3-butadiene.

The styrene-acryl-based copolymer is a copolymer obtained by emulsion-polymerizing an aromatic vinyl compound such as styrene, α-methylstyrene, vinyltoluene, p-t-butylstyrene, and chlorostyrene, an unsaturated carboxylic acid such as acrylic acid, methacrylic acid, crotonic acid, cinnamic acid, itaconic acid, fumaric acid, maleic acid, and butentricarboxylic acid, an unsaturated polycarboxylic acid alkyl ester having at least one carboxyl group such as itaconic acid monoethyl ester, fumaric acid monobutyl ester, and maleic acid monobutyl ester, an unsaturated sulfonic acid monomer such as acrylamidepropanesulfonic acid, sodium sulfoethyl acrylate, and sodium sulfopropyl methacrylate, or a salt thereof, and a monomer consisting of other compounds copolymerizable with them. The aromatic vinyl compound is preferably styrene or the like. The unsaturated carboxylic acid monomer, the unsaturated sulfonic acid monomer, or the salt thereof is preferably acrylic acid, methacrylic acid, itaconic acid, fumaric acid, or the like.

The olefin-unsaturated carboxylic acid-based copolymer is a copolymer obtained by emulsion-polymerizing olefin, particularly α-olefin such as ethylene and propylene, an unsaturated carboxylic acid such as acrylic acid, methacrylic acid, crotonic acid, cinnamic acid, itaconic acid, fumaric acid, maleic acid, and butentricarboxylic acid, an unsaturated polycarboxylic acid alkyl ester having at least one carboxyl group such as itaconic acid monoethyl ester, fumaric acid monobutyl ester, and maleic acid monobutyl ester, an unsaturated sulfonic acid monomer such as acrylamidepropanesulfonic acid, sodium sulfoethyl acrylate, and sodium sulfopropyl methacrylate, or a salt thereof, and a monomer consisting of other compounds copolymerizable with them. Olefin is preferably α-olefin, particularly ethylene or the like. The unsaturated carboxylic acid monomer, the unsaturated sulfonic acid monomer, or the salt thereof is preferably acrylic acid, methacrylic acid, itaconic acid, fumaric acid, or the like. As a specific example of an olefin-unsaturated carboxylic acid-based copolymer, an aqueous dispersion of an ethylene-acryl acid copolymer ammonium salt is commercially available as ZAIKTHENE AC, ZAIKTHENE A, or the like (manufactured by Sumitomo Seika Chemicals Company, Limited.) and can be easily available to be utilized.

A content of the anionic binder resin is not particularly limited. By way of an example, the content of the anionic binder resin is preferably 20% by mass or more, more preferably 50% by mass or more, further preferably 60% by mass or more, and particularly preferably 70% by mass or more, based on a total solid content of the moisture-proof coating agent. Moreover, the content of the anionic binder resin is preferably 95% by mass or less, and more preferably 85% by mass or less, in the total solid content of the moisture-proof coating agent. When the content of the anionic binder resin is within the above-described ranges, a functional layer (moisture-proof layer) to be obtained can express a high moisture resistance.

The inorganic layered compound is not particularly limited. By way of an example, the inorganic layered compound may be any of a natural product or a synthetic product, or a mixture of them. The natural product includes a smectite-based clay mineral such as montmorillonite, kaolinite (kaolin mineral), pyrophyllite, talc, beidellite, nontronite, saponite, hectorite, sauconite, and stevensite, a mica-based clay mineral such as bentonite, pure mica, and brittle mica, and the like. The synthetic product includes synthetic hectorite (sodium magnesium silicate), synthetic bentonite, synthetic saponite, synthetic mica, and the like. Among them, the inorganic layered compound is preferably at least one selected from the group consisting of water-swellable montmorillonite, bentonite, and synthetic mica, synthetic hectorite, and synthetic bentonite, from the viewpoint of improving dispersibility. Moreover, the inorganic layered compound is more preferably montmorillonite, synthetic mica, or synthetic hectorite, from the viewpoint of improving barrier property. The inorganic layered compound may be used in combination.

A content of the inorganic layered compound is not particularly limited. By way of an example, the content of the inorganic layered compound is preferably 80% by mass or less, more preferably 70% by mass or less, further preferably 30% by mass or less, and particularly preferably 20% by mass or less, based on the total solid content in the moisture-proof coating agent. On the other hand, the content of the inorganic layered compound is preferably 1% by mass or more, and more preferably 2% by mass or more, based on the total solid content in the moisture-proof coating agent. When the content of the inorganic layered compound content is within the above-described ranges, a functional layer (moisture-proof layer) to be obtained can express a high moisture resistance.

The aqueous medium is not particularly limited. By way of an example, the aqueous medium may be water alone, or may be an aqueous medium obtained by mixing water with a water-miscible organic solvent such as: alcohols such as methanol, ethanol, and propanol; polyhydric alcohols such as ethylene glycol and propylene glycol, and alkyl ether derivatives thereof; esters such as ethyl formate, methyl acetate, and ethyl acetate; and ketones such as acetone.

The moisture-proof coating agent may contain at least one selected from amino acids and cationic resins in order to further improve moisture resistance. Amino acids and cationic resins are not particularly limited. By way of an example, amino acids include amino acid such as glycine, alanine, leucine, valine, phenylalanine, proline, serine, threonine, lysine, arginine, aspartic acid, glutamic acid, polylysine, and polyglutamic acid, a polymer of amino acids, amino acid derivatives, and the like. Amino acids may be copolymers of amino acids. Amino acids are preferably copolymers or polymers of amino acids since they have more excellent moisture resistance.

Cationic resins include polyalkylene polyamine, a polyamide compound, a polyamidoamine-epihalohydrin or formaldehyde condensation reaction product, a polyamine-epihalohydrin or formaldehyde condensation reaction product, a polyamidopolyurea-epihalohydrin or formaldehyde condensation reaction product, a polyaminepolyurea-epihalohydrin or formaldehyde condensation reaction product, a polyamidoaminepolyurea-epihalohydrin or formaldehyde condensation reaction product, a polyamidoaminepolyurea compound, a polyaminepolyurea compound, a polyamidoaminepolyurea compound and a polyamidoamine compound, polyethyleneimine, polyvinylpyridine, an amino-modified acrylamide-based compound, polyvinylamine, polydiallyldimethylammonium chloride, and the like.

Additives may be appropriately compounded in the moisture-proof coating agent as needed. Additives are not particularly limited. By way of an example, additives include a dispersant, a surfactant, an anti-foaming agent, a wetting agent, dye, a toning agent, a thickener, and the like.

A method of producing a moisture-proof coating agent is not particularly limited. By way of an example, the moisture-proof coating agent may be prepared by mixing an anionic binder resin, an inorganic layered compound, an aqueous medium, and, as appropriate, amino acids, cationic resins, and additives, and stirring and mixing them thoroughly at a normal temperature.

If the functional layer is a moisture-proof layer, a thickness of the moisture-proof layer is not particularly limited. By way of an example, the thickness of the moisture-proof layer is preferably 3 µm or more, and more preferably 5 µm or more. Moreover, the thickness of the moisture-proof layer is preferably 30 µm or less, and more preferably 20 µm or less. When the thickness of the moisture-proof layer is within the above-described ranges, a laminated body to be obtained has an excellent moisture resistance.

### • Case where functional layer is gas barrier layer

The gas barrier layer is provided by being imparted with a gas barrier coating agent. For example, the gas barrier coating agent includes an aqueous polymer, an inorganic layered compound, and an aqueous medium.

The aqueous polymer is not particularly limited. By way of an example, the aqueous polymer includes polyvinyl alcohol, modified polyvinyl alcohol, starch and a derivative thereof, a cellulose derivative, polyvinylpyrrolidone, a polyacrylonitrile-based resin, a polyamide-based resins, a polyester-based resins, a urethane-based resin, a polyacrylic acid and a salt thereof, casein, polyethyleneimine, and the like. Among them, the aqueous polymer is preferably a fully saponified or a partially saponified polyvinyl alcohol, or a modified polyvinyl alcohol, because it may impart a more excellent gas barrier property. The modified polyvinyl alcohol includes an ethylene-modified polyvinyl alcohol, a carboxy-modified polyvinyl alcohol, a silicon-modified polyvinyl alcohol, an acetoacetyl-modified polyvinyl alcohol, a diacetone-modified polyvinyl alcohol, and the like.

A content of the aqueous polymer is not particularly limited. By way of an example, the content of the aqueous polymer is preferably 50% by mass or more, and more preferably 70% by mass or more, in a total solid content of the gas barrier coating agent.

The inorganic layered compound is similar to the inorganic layered compound described above in relation to the moisture-proof layer. The inorganic layered compound is preferably at least one selected from the group consisting of mica, bentonite, and kaolin, since it improves gas barrier property.

A content of the inorganic layered compound is not particularly limited. By way of an example, the content of the inorganic layered compound is preferably 1 part by mass or more, and more preferably 30 parts by mass or more, based on 100 parts by mass of the aqueous polymer of the gas barrier coating agent. Moreover, the content of the inorganic layered compound is preferably 20 parts by mass or less, and more preferably 50 parts by mass or less, based on 100 parts by mass of the aqueous polymer of the gas barrier coating agent. When the content of the inorganic layered compound is within the above-described ranges, a functional layer (gas barrier layer) to be obtained has an excellent gas barrier property under a high humidity condition.

The aqueous medium may be water alone, or may be an aqueous medium obtained by mixing water with a water-miscible organic solvent such as: alcohols such as methanol, ethanol, and propanol; polyhydric alcohols such as ethylene glycol and propylene glycol, and alkyl ether derivatives thereof; esters such as ethyl formate, methyl acetate, and ethyl acetate; and ketones such as acetone.

A method of producing a gas barrier coating agent is not particularly limited. By way of an example, the gas barrier coating agent can be prepared by mixing an aqueous polymer, an inorganic layered compound, and an aqueous medium, and stirring and mixing them thoroughly at a normal temperature.

If the functional layer is a gas barrier layer, a thickness of the gas barrier layer is not particularly limited. By way of an example, the thickness of the gas barrier layer is preferably 0.1 µm or more, and more preferably 0.5 µm or more. Moreover, the thickness of the gas barrier layer is preferably 10 µm or less, and more preferably 5 µm or less. When the thickness of the gas barrier layer is within the above-described ranges, a laminated body to be obtained has an excellent gas barrier property.

### • Case where functional layer is oil-resistant layer

The oil-resistant layer is provided by being imparted with an oil-resistant coating agent. For example, as the oil-resistant coating agent, an oil-resistant coating agent containing a pigment, a styrene-butadiene copolymer and polyvinyl alcohol, and an aqueous medium, or an oil-resistant coating agent containing a styrene-acryl-based copolymer, wax, and an aqueous medium can be used.

An oil-resistant coating agent containing a pigment, a styrene-butadiene copolymer and polyvinyl alcohol, and an aqueous medium will be described below.

The pigment is not particularly limited. By way of an example, the pigment includes various types of pigments such as an inorganic pigment and an organic pigment. The inorganic pigment includes minerals such as kaolins such as structural kaolin, delaminated kaolin, and calcined kaolin, synthetic mica, heavy calcium carbonate, light calcium carbonate, talc, calcium sulfate, barium sulfate, titanium dioxide, zinc oxide, alumina, aluminum hydroxide, magnesium carbonate, magnesium oxide, silica, magnesium aluminosilicate, calcium silicate, white carbon, bentonite, zeolite, sericite, smectite, and the like. Among them, kaolin is preferable because it may impart with excellent oil resistance and water resistance. Moreover, kaolin is excellent in transparency when used to increase density of an oil-resistant paper, and also excellent in glossiness.

If the pigment is kaolin, an average particle size of kaolin is preferably 0.5 µm or more, and more preferably 1 µm or more. Moreover, the average particle size of kaolin is preferably 20 µm or less, and more preferably 10 µm or less. When the average particle size of kaolin is within the above-described ranges, a functional layer (oil-resistant layer) to be obtained has an excellent oil resistance.

The organic pigment includes: polydienes such as polyisoprene, polyneoprene, and polybutadiene; polyalkenes such as polybutene, polyisobutylene, and polypropylene; polymers and copolymers of vinyl-based monomers such as vinyl acetate, styrene, (meth)acrylic acid, (meth)acrylic acid alkyl ester, (meth)acrylamide, and methyl vinyl ether; dense, hollow, or through-pore particles of a polyurethane-based resin, a polyester-based resin, a polyamide-based resin, an urea-based resin, a melamine-based resin, and a benzoguanamine-based resin; and the like.

A content of the pigment is not particularly limited. By way of an example, the content of the pigment is preferably 20% by mass or more, and more preferably 40% by mass or more, in a total solid content of the oil-resistant coating agent. Moreover, the content of the pigment is preferably 70% by mass or less, and more preferably 65% by mass or less, in the total solid content of the oil-resistant coating agent. When the content of the pigment is within the above-described ranges, an oil-resistant layer to be obtained has excellent oil resistance and water resistance.

A styrene-butadiene copolymer is compounded in a functional layer to impart with an excellent water resistance (water repellency). The styrene-butadiene copolymer is obtained by copolymerizing styrene and butadiene as monomers. Besides, when a water-insoluble copolymer is used, the copolymer may be used in a form of latex. The styrene-butadiene copolymer of the present embodiment is not particularly limited. By way of an example, the styrene-butadiene copolymer includes "A6160" that is commercially available from Asahi Kasei Corporation, and the like.

A glass transition temperature (Tg) of the styrene-butadiene copolymer is preferably 30°C or lower, more preferably 20°C or lower, and further preferably 0°C or lower. Moreover, the Tg of the styrene-butadiene copolymer is preferably -40°C or higher, more preferably -30°C or higher, and further preferably -20°C or higher. When the Tg of the styrene-butadiene copolymer is within the above-described ranges, an oil-resistant layer to be obtained may exhibit an excellent film-forming ability and excellent water-repellent and oil-resistant properties.

An average particle size of the styrene-butadiene copolymer is preferably 0.01 µm or more, and more preferably 0.03 µm or more. Moreover, the average particle size of the styrene-butadiene copolymer is preferably 1.0 µm or less, and more preferably 0.5 µm or less. When the average particle size of the styrene-butadiene copolymer is within the above-described ranges, the styrene-butadiene copolymer has an excellent water dispersibility.

A content of the styrene-butadiene copolymer is not particularly limited. By way of an example, the content of the styrene-butadiene copolymer is preferably 20% by mass or more, and more preferably 25% by mass or more, in the total solid content of the oil-resistant coating agent. Moreover, the content of the styrene-butadiene copolymer is preferably 50% by mass or less, and more preferably 45% by mass or less, in the total solid content of the oil-resistant coating agent. When the content of the styrene-butadiene copolymer is within the above-described ranges, the oil-resistant coating agent may form an oil-resistant layer, which is excellent in both oil resistance and water resistance (water repellency) on a paper base material.

Polyvinyl alcohol is not particularly limited. By way of an example, polyvinyl alcohol includes a polyvinyl alcohol-based resin such as an unmodified fully saponified polyvinyl alcohol, a partially saponified polyvinyl alcohol, and a modified polyvinyl alcohol, and the like. The modified polyvinyl alcohol includes an ethylene-modified polyvinyl alcohol, a carboxy-modified polyvinyl alcohol, a silicon-modified polyvinyl alcohol, an acetoacetyl group-modified polyvinyl alcohol, a diacetone group-modified polyvinyl alcohol, and the like. Among them, an unmodified fully saponified polyvinyl alcohol, an ethylene-modified polyvinyl alcohol, and a carboxy-modified polyvinyl alcohol are preferable because they may impart with an excellent oil resistance. Furthermore, the ethylene-modified polyvinyl alcohol may suppress thickening of the oil-resistant coating agent. The oil-resistant coating agent thereby has an excellent coating suitability. In addition, an oil-resistant layer to be obtained has an excellent coating surface status.

A content of the polyvinyl alcohol-based resin is not particularly limited. By way of an example, the content of the polyvinyl alcohol-based resin is preferably 0.5% by mass or more, and more preferably 3% by mass or more, in the total solid content of the oil-resistant coating agent. Moreover, the content of the polyvinyl alcohol-based resin is preferably 20% by mass or less, and more preferably 10% by mass or less, in the total solid content of the oil-resistant coating agent. When the content of the polyvinyl alcohol-based resin is within the above-described ranges, an oil-resistant layer to be obtained may exhibit a more excellent oil resistance. Furthermore, the polyvinyl alcohol-based resin may suppress thickening of the oil-resistant coating agent. The oil-resistant coating agent may thereby suppress occurrence of coating defects.

The aqueous medium may be water alone, or may be an aqueous medium obtained by mixing water with a water-miscible organic solvent such as: alcohols such as methanol, ethanol, and propanol; polyhydric alcohols such as ethylene glycol and propylene glycol, and alkyl ether derivatives thereof; esters such as ethyl formate, methyl acetate, and ethyl acetate; and ketones such as acetone.

Next, an oil-resistant coating agent containing a styrene-acryl-based copolymer, wax, and an aqueous medium will be described.

The styrene-acryl-based copolymer includes a styrene-acryl-based copolymer obtained by copolymerizing styrene and a styrene derivative with acrylic acid alkyl ester such as acrylic acid (methacrylic acid) and methyl acrylate, ethyl acrylate, and butyl acrylate, methacrylic acid ester such as methyl methacrylate, or the like, preferably, a styrene-acryl-based copolymer emulsion.

Wax includes a paraffin wax, a carboxyl group-containing paraffin wax, a microcrystalline wax, a polyethylene wax, a carboxyl group-containing polyethylene wax, a polypropylene wax, a polyolefin-based wax such as an ethylene-propylene copolymer wax, a candelilla wax, a rice wax, a montan wax, fatty acid such as stearic acid, fatty acid amide such as stearic acid amide, stearate bisamide, oleic acid amide, and palmitic acid amide, a fatty acid metal salt such as zinc stearate and calcium stearate, and the like. A content of wax is preferably 1.5 to 20% by mass in the total solid content of the oil-resistant coating agent.

The aqueous medium may be water alone, or may be an aqueous medium obtained by mixing water with a water-miscible organic solvent such as: alcohols such as methanol, ethanol, and propanol; polyhydric alcohols such as ethylene glycol and propylene glycol, and alkyl ether derivatives thereof; esters such as ethyl formate, methyl acetate, and ethyl acetate; and ketones such as acetone.

A method of producing an oil-resistant coating agent is not particularly limited. By way of an example, the oil-resistant coating agent may be prepared by mixing a pigment, a styrene-butadiene copolymer, polyvinyl alcohol, and an aqueous medium, or by mixing a styrene-acryl-based copolymer, wax, and an aqueous medium, and by stirring and mixing them thoroughly at a normal temperature.

If the functional layer is an oil-resistant layer, a thickness of the oil-resistant layer is not particularly limited. By way of an example, the thickness of the oil-resistant layer is preferably 1 µm or more, and more preferably 3 µm or more. Moreover, the thickness of the oil-resistant layer is preferably 20 µm or less, and more preferably 10 µm or less. When the thickness of the oil-resistant layer is within the above-described ranges, a laminated body to be obtained has an excellent oil resistance.

### • Case where functional layer is water-resistant layer

The water-resistant layer is provided by being imparted with a water-resistant coating agent. The water-resistant coating agent is not particularly limited. By way of an example, the water-resistant coating agent includes a water-resistant coating agent containing a styrene-acryl-based copolymer, wax, and an aqueous medium, and the like.

The styrene-acryl-based copolymer is not particularly limited. By way of an example, the styrene-acryl-based copolymer includes a styrene-acryl-based copolymer obtained by copolymerizing styrene and a styrene derivative with acrylic acid alkyl ester such as acrylic acid (methacrylic acid) and methyl acrylate, ethyl acrylate, and butyl acrylate, methacrylic acid ester such as methyl methacrylate, or the like. Among them, the styrene-acryl-based copolymer is preferably a styrene-acryl-based copolymer emulsion.

Wax is not particularly limited. By way of an example, wax includes a paraffin wax, a carboxyl group-containing paraffin wax, a microcrystalline wax, a polyethylene wax, a carboxyl group-containing polyethylene wax, a polypropylene wax, a polyolefin-based wax such as an ethylene-propylene copolymer wax, a candelilla wax, a rice wax, a montan wax, fatty acid such as stearic acid, fatty acid amide such as stearic acid amide, stearate bisamide, oleic acid amide, and palmitic acid amide, fatty acid metal salts such as zinc stearate and calcium stearate, and the like. A content of wax is preferably 1.5 to 20% by mass in a total solid content of the water-resistant coating agent.

The aqueous medium may be water alone, or may be an aqueous medium obtained by mixing water with a water-miscible organic solvent such as: alcohols such as methanol, ethanol, and propanol; polyhydric alcohols such as ethylene glycol and propylene glycol, and alkyl ether derivatives thereof; esters such as ethyl formate, methyl acetate, and ethyl acetate; and ketones such as acetone.

A method of producing a water-resistant coating agent is not particularly limited. By way of an example, the water-resistant coating agent may be prepared by mixing a styrene-acryl-based copolymer, wax, and an aqueous medium, and by stirring and mixing them thoroughly at a normal temperature.

If the functional layer is a water-resistant layer, a thickness of the water-resistant layer is not particularly limited. By way of an example, the thickness of the water-resistant layer is preferably 1 µm or more, and more preferably 3 µm or more. Moreover, the thickness of the water-resistant layer is preferably 20 µm or less, and more preferably 10 µm or less. When the thickness of the water-resistant layer is within the above-described ranges, a laminated body to be obtained has an excellent water resistance.

### • Case where functional layer is water-repellent layer

The water-repellent layer is provided by being imparted with a water-repellent coating agent. For example, the water-repellent coating agent includes a water-repellent agent, an aqueous medium, and, if necessary, an inorganic pigment.

The water-repellent agent is not particularly limited. By way of an example, the water-repellent agent includes a water-based coating agent containing a paraffin-based hydrocarbon (e.g., BRITONE FC-350 manufactured by SAKATA INX CORPORATION), a wax-based water-repellent agent (e.g., CELESTAR 40R manufactured by LION SPECIALTY CHEMICALS CO., LTD.), and the like. The water-repellent agent is not limited to paraffin-based ones. The water-repellent agent may contain a microcrystalline wax, a polyethylene wax, a modified wax component such as a maleated petroleum resin, and the like. Moreover, a wax-based component may include a rosin-based resin or an unsaturated higher alcohol, etc.

The aqueous medium may be water alone, or may be an aqueous medium obtained by mixing water with a water-miscible organic solvent such as: alcohols such as methanol, ethanol, and propanol; polyhydric alcohols such as ethylene glycol and propylene glycol, and alkyl ether derivatives thereof; esters such as ethyl formate, methyl acetate, and ethyl acetate; and ketones such as acetone.

A method of producing a water-repellent coating agent is not particularly limited. By way of an example, the water-repellent coating agent may be prepared by mixing a water-repellent agent and an aqueous medium, and stirring and mixing them thoroughly at a normal temperature.

If the functional layer is a water-repellent layer, a thickness of the water-repellent layer is not particularly limited. By way of an example, the thickness of the water-repellent layer is preferably 1 µm or more, and more preferably 3 µm or more. Moreover, the thickness of the water-repellent layer is preferably 20 µm or less, and more preferably 10 µm or less. When the thickness of the water-repellent layer is within the above-described ranges, a laminated body to be obtained has an excellent water repellency.

Referring back to the general description of the bending resistance agent, the bending resistance agent of the present embodiment is applied so as to form a bending resistance layer between a paper base material and a functional layer, in a laminated body in which various functional layers are provided on the paper base material. The obtained laminated body has less deterioration in functions of the functional layer before and after bending.

### <Laminated body and method of producing laminated body>

The laminated body according to one embodiment of the present invention is a laminated body in which a paper base material layer, the bending resistance layer, and a functional layer are laminated in this order. The bending resistance layer is a layer formed by being imparted with the bending resistance agent described above.

The paper base material layer, the bending resistance layer, and the functional layer that constitute the laminated body are as described above in relation to the embodiment of the bending resistance agent.

A method of producing a laminated body is not particularly limited. By way of an example, the laminated body may be produced by imparting a paper base material layer with a bending resistance agent, and then imparting it with various functional coating agents (a moisture-proof coating agent, a gas barrier coating agent, an oil-resistant coating agent, a water-resistant coating agent, a water-repellent coating agent). The imparted bending resistance agent and functional coating agent may be dried respectively after being imparted, or may be dried together after being imparted.

An amount of the bending resistance layer coated (in terms of solid content) is preferably 1 g/m² or more, and more preferably 3 g/m² or more. Moreover, the amount of the bending resistance layer coated (in terms of solid content) is preferably 30 g/m² or less, and more preferably 20 g/m² or less. When the amount of the bending resistance layer coated is within the above-described ranges, a laminated body to be obtained exhibits an excellent bending resistance.

If the functional layer is a moisture-proof layer, an amount of a moisture-proof coating agent coated (in terms of solid content) is preferably 1 g/m² or more, and more preferably 3 g/m² or more. Moreover, the amount of the moisture-proof coated (in terms of solid content) is preferably 30 g/m² or less, and more preferably 20 g/m² or less. When the amount of the moisture-proof coating agent coated is within the above-described ranges, the laminated body exhibits an excellent moisture resistance.

If the functional layer is a gas barrier layer, an amount of a gas barrier coating agent coated (in terms of solid content) is preferably 0.1 g/m² or more, and more preferably 0.5 g/m² or more. Moreover, the amount of the gas barrier coating agent coated (in terms of solid content) is preferably 10 g/m² or less, and more preferably 5 g/m² or less. When the amount of the gas barrier coating agent coated is within the above-described ranges, the laminated body exhibits an excellent gas barrier property.

If the functional layer is an oil-resistant layer, an amount of an oil-resistant coating agent coated (in terms of solid content) is preferably 1 g/m² or more, and more preferably 3 g/m² or more. Moreover, the amount of the oil-resistant coating agent coated (in terms of solid content) is preferably 20 g/m² or less, and more preferably 10 g/m² or less. When the amount of the oil-resistant coating agent coated is within the above-described ranges, the laminated body exhibits an excellent oil resistance.

If the functional layer is a water-resistant layer, an amount of a water-resistant coating agent coated (in terms of solid content) is preferably 1 g/m² or more, and more preferably 3 g/m² or more. Moreover, the amount of the water-resistant coating agent coated (in terms of solid content) is preferably 20 g/m² or less, and more preferably 10 g/m² or less. When the amount of the water-resistant coating agent coated is within the above-described ranges, the laminated body exhibits an excellent water resistance.

If the functional layer is a water-repellent layer, an amount of a water-repellent coating agent coated (in terms of solid content) is preferably 1 g/m² or more, and more preferably 3 g/m² or more. Moreover, the amount of the water-repellent coating agent coated (in terms of solid content) is preferably 20 g/m² or less, and more preferably 10 g/m² or less. When the amount of the water-repellent coating agent coated is within the above-described ranges, the laminated body exhibits an excellent water repellency.

As described above, according to the present embodiment, in the laminated body in which various functional layers are provided on the paper base material, the bending resistance layer with which the above-described bending resistance agent is imparted is formed between the paper base material and the functional layer. Therefore, a laminated body to be obtained exhibits less deterioration in functions of the functional layer before and after bending.

One embodiment of the present invention has been described above. The present invention is not particularly limited to the above-described embodiment. Besides, the above-described embodiment mainly describes an invention having the following configurations.
(1) A bending resistance agent that satisfies the following conditions 1 to 3, in a laminated body in which a paper base material layer, a bending resistance layer, and a functional layer are laminated in this order, for forming the bending resistance layer (excluding a case where the bending resistance agent is OKS-1009 and the functional layer is an active energy ray-curable ink composition layer).

### (Condition 1)

The bending resistance agent comprises resin and a medium, and
a content of the resin (in terms of solid content) is 70 to 100% by mass in the bending resistance agent.

### (Condition 2)

An elongation degree of the bending resistance layer in a tensile test, as calculated by the following equation, is 200% or more: $Elongation degree \left(%\right) = 100 \times \left(Lb-L0\right) / L 0 ,$ provided that Lb refers to a gauge length at break and L0 refers to a gauge length before the tensile test. The tensile test is a tensile test performed in accordance with JIS K 6251.

### (Condition 3)

A shape restoration degree of the bending resistance layer, as calculated by the following equation, is 80% or more: $Shape restoration degree \left(%\right) = 100 \times \left(L1-L2\right) / \left(L1-L0\right) ,$ provided that L0 refers to a gauge length before the tensile test. L1 refers to a gauge length at 100% elongation degree in the tensile test, or a limit gauge length at which the layer does not break if it cannot be elongated to 100%. L2 is a gauge length of the bending resistance layer after an external force is removed following the tensile test, and the tensile test is a tensile test performed in accordance with JIS K 6251.

According to such a configuration, the bending resistance agent is applied so as to form a bending resistance layer between a paper base material and a functional layer, in a laminated body in which various functional layers are provided on the paper base material. The obtained laminated body has less deterioration in functions of the functional layer before and after bending.

(2) The bending resistance agent of (1), wherein the resin includes at least one selected from the group consisting of a polyurethane-based resin, an acryl-based resin, a polyester-based resin, a polyvinyl alcohol-based resin, a styrene-butadiene-based resin, a vinyl chloride-based resin, an ethylene-vinyl acetate copolymer-based resin, and a polyolefin-based resin.

According to such a configuration, the bending resistance agent is applied so as to form a bending resistance layer comprising the above-described resin between a paper base material and a functional layer, in a laminated body in which various functional layers are provided on the paper base material. The obtained laminated body exhibits less deterioration in functions of the functional layer before and after bending.

(3) The bending resistance agent of (1) or (2), wherein the functional layer includes at least any layer of a moisture-proof layer, a gas barrier layer, an oil-resistant layer, a water-resistant layer, or a water-repellent layer.

According to such a configuration, the bending resistance agent is applied so as to form a bending resistance layer between a paper base material and a functional layer, in a laminated body in which various functional layers are provided on the paper base material. The obtained laminated body has less deteriorated various functions of the functional layer (moisture resistance, gas barrier property, oil resistance, water resistance, or water repellency) before and after bending.

(4) A laminated body in which a paper base material layer, a bending resistance layer, and a functional layer are laminated in this order, the bending resistance layer being a layer formed by being imparted with the bending resistance agent of any of (1) to (3).

According to such a configuration, the obtained laminated body has less deterioration in functions of the functional layer before and after bending.

### EXAMPLES

Hereinafter, the present invention will be described in more detail with reference to Examples. The present invention is not limited to these Examples. Besides, unless otherwise specified, "%" means "% by mass", and "part" means "part by mass". In addition, the numbers for the quantities of each material in the table represent "parts by mass".

Raw materials used are shown below.

### <Paper base material>

OK Blizzard (basis weight: 70 g/m², manufactured by Oji Materia Co., Ltd.)

### <Moisture-proof coating agent>

A moisture-proof coating agent was obtained by adding, to 60.0 parts of an anionic binder (ZAIKTHENE A, solid content: 25%, manufactured by Sumitomo Seika Chemicals Company, Limited.), 25.0 parts of an inorganic layered compound (SOMASIF ME300B-4T, solid content: 8%, manufactured by Katakura & Co-op Agri Corporation) under stirring, and further 2.0 parts of a modified amide-based resin (Sumirez (Registered Trademark) Resin SPI-203(50)H, manufactured by Taoka Chemical Co., Ltd.) and 13 parts of an ion-exchanged water as dispersants, and stirring them.

### <Oil-resistant coating agent>

As the oil-resistant coating agent, INXKote WB FLEXO FDA GREASE RES AC4551 was used.

### <Bending resistance agent>

Polyurethane-based resin 1 (SUPERFLEX 460S, manufactured by DKS Co. Ltd.)
Polyurethane-based resin 2 (SUPERFLEX 210, manufactured by DKS Co. Ltd.)
Acryl-based resin 1 (DXA.4081, manufactured by Vanora AG)
Acryl-based resin 2 (Neocryl A-1125, manufactured by Covestro AG)
Polyvinyl alcohol-based resin 1 (OKS-1009, manufactured by Mitsubishi Chemical Corporation)
Polyvinyl alcohol-based resin 2 (BVE8049Q, manufactured by Mitsubishi Chemical Corporation)
Polyvinyl alcohol-based resin 3 (OKS-8118, manufactured by Mitsubishi Chemical Corporation)
Styrene-butadiene-based resin 1 (SMARTEX VA-1015, manufactured by NIPPON A&L INC.)
Styrene-butadiene-based resin 2 (Nipol LX407S12, manufactured by Zeon Corporation)
Ethylene-vinyl acetate copolymer-based resin 1 (SUMIKAFLEX S-201HQ, manufactured by Sumika Chemtex Co., Ltd.)
Ethylene-vinyl acetate copolymer-based resin 2 (SUMIKAFLEX SDX-5100, manufactured by Sumika Chemtex Co., Ltd.)
Polyolefin-based resin 1 (Arrowbase SE-1030N, manufactured by UNITIKA LTD.)
Polyolefin-based resin 2 (Arrowbase SD-1010, manufactured by UNITIKA LTD.)

### <Method of producing bending resistance agent>

As described in Table 1, polyurethane resins 1, 2, acryl-based resin 1, and styrene-butadiene-based resins 1, 2 were diluted with a medium (ion-exchanged water) into a solod content of 30% to obtain bending resistance agents 1 to 3, 8, and 9. For acryl-based resin 2, an undiluted solution was used as bending resistance agent 4. In addition, polyvinyl alcohol-based resins 1 to 3 were dissolved in a solvent (ion-exchanged water) to obtain bending resistance agents 5 to 7 as solutions with a solid content of 10%. Ethylene-vinyl acetate copolymer-based resins 1, 2 were diluted with a medium (ion-exchanged water) into a solod content of 30% to obtain bending resistance agents 10, 11. Polyolefin-based resins 1, 2 were diluted with a medium (ion-exchanged water) into a solod content of 30% to obtain bending resistance agents 12, 13.

**Table 1**

| Resin | | Bending resistance agent |
|---|---|---|
| Polyurethane-based resin 1 | SUPERFLEX 460S, manufactured by DKS Co. Ltd. | Bending resistance agent 1 |
| Polyurethane-based resin 2 | SUPERFLEX 210, manufactured by DKS Co. Ltd. | Bending resistance agent 2 |
| Acryl-based resin 1 | DXA.4081, manufactured by Vanora AG | Bending resistance agent 3 |
| Acryl-based resin 2 | Neocryl A-1125, manufactured by Covestro AG | Bending resistance agent 4 |
| Polyvinyl alcohol-based resin 1 | OKS-1009, manufactured by Mitsubishi Chemical Corporation | Bending resistance agent 5 |
| Polyvinyl alcohol-based resin 2 | BVE8049Q, manufactured by Mitsubishi Chemical Corporation | Bending resistance agent 6 |
| Polyvinyl alcohol-based resin 3 | OKS-8118, manufactured by Mitsubishi Chemical Corporation | Bending resistance agent 7 |
| Styrene-butadiene-based resin 1 | SMARTEX VA-1015, manufactured by NIPPON A&L INC. | Bending resistance agent 8 |
| Styrene-butadiene-based resin 2 | Nipol LX407S12, manufactured by Zeon Corporation | Bending resistance agent 9 |
| Ethylene-vinyl acetate copolymer-based resin 1 | SUMIKAFLEX S-201HQ, manufactured by Sumika Chemtex Co., Ltd. | Bending resistance agent 10 |
| Ethylene-vinyl acetate copolymer-based resin 1 | SUMIKAFLEX SDX-5100, manufactured by Sumika Chemtex Co., Ltd. | Bending resistance agent 11 |
| Polyolefin-based resin 1 | Arrowbase SE-1030N, manufactured by UNITIKA LTD. | Bending resistance agent 12 |
| Polyolefin-based resin 2 | Arrowbase SD-1010, manufactured by UNITIKA LTD. | Bending resistance agent 13 |

### <Example 1>

Bending resistance agent 1 was applied onto one side of a paper base material using a bar coater and then dried with air by a dryer at 60°C, into an application amount of 3 g/m² after drying, to form a bending resistance layer. Furthermore, an oil-resistant agent was applied on top of the bending resistance layer using the bar coater and then dried with air by the dryer at 60°C, into an application amount of 6 g/m² after drying, to form an oil-resistant layer, thereby producing a laminated body for evaluation on oil resistance in Example 1.

### <Examples 2-14>

A laminated body for evaluation on oil resistance or a laminated body for evaluation on moisture resistance was produced in the similar manner as in Example 1, except that bending resistance agents 1, 3, 5, 6, 8, 10, 12 were adopted for an oil-resistant layer and a moisture-proof layer in the combinations shown in Table 2 below.

### <Comparative examples 1, 2>

Each functional layer was applied onto one side of a paper base material using the bar coater and then dried with air by the dryer at 60°C, into an application amount of 6 g/m² after drying, to form an oil-resistant layer, thereby producing a laminated body for evaluation on oil resistance or a laminated body for evaluation on moisture resistance in Comparative examples 1 and 2.

### <Comparative examples 3-12>

A laminated body for evaluation on oil resistance or a laminated body for evaluation on moisture resistance was produced in the similar manner as in Example 1, except that bending resistance agents 2, 4, 7, 9, 11, 13 were adopted for an oil-resistant layer and a moisture-proof layer in the combinations shown in Table 2 below.

An elongation degree of a bending resistance layer and a shape restoration degree of the bending resistance layer were evaluated by the following evaluation method. The results are shown in Table 2.

Moreover, moisture resistance and oil resistance of the obtained laminated body were evaluated depending on a type of a functional layer produced. These evaluations were conducted before and after bending as shown below. The results are shown in Table 2.

### (Method of measuring elongation degree of bending resistance layer)

A bending resistance agent was applied onto a glass base material, dried, and then peeled off to produce a dumbbell-shaped (film thickness: 300 µm) No. 3 test piece in accordance with JIS K 6251, tensile. Next, under the following conditions, an elongation of each test piece when pulled until it broke was measured using the following tester.
Tensile tester: AGS-X, manufactured by Shimadzu Corporation
Stretching speed: 300 mm/min
Temperature: 23°C
Humidity: 50%
An elongation degree can be determined by the following equation: $Elongation degree \left(%\right) = 100 \times \left(Lb-L0\right) / L 0 ,$ provided that Lb refers to a gauge length at break and L0 refers to a gauge length before the tensile test. The tensile test is a tensile test performed in accordance with JIS K 6251.

### (Method of evaluating shape restoration degree of bending resistance agent)

A shape restoration degree was evaluated by conducting a tensile test performed in accordance with JIS K 6251. The tensile test for evaluating the shape restoration degree was performed under the following conditions using the following tester. A bending resistance agent was applied onto a glass base material, dried, and then peeled off to produce a dumbbell-shaped (film thickness: 300 µm) No. 3 test piece in accordance with JIS K 6251, tensile. Next, under the following conditions, each test piece was extended using the tester described below and held in this state for 5 minutes. The test piece was then removed from the tester, and its length after three hours was measured.
Tensile tester: AGS-X, manufactured by Shimadzu Corporation
Stretching speed: 50 mm/min
Temperature: 23°C
Humidity: 50%
A shape restoration degree can be determined by the following equation: $Shape restoration degree \left(%\right) = 100 \times \left(L1-L2\right) / \left(L1-L0\right) ,$ provided that L0 refers to a gauge length before the tensile test. L1 refers to a gauge length at 100% elongation degree in the tensile test, or a limit gauge length at which the layer does not break if it cannot be elongated to 100%. L2 is a gauge length of the layer after an external force is removed following the tensile test.

### (Bending method)

A 4000 g roller was passed over a laminated body 10 times while rolling thereon at a speed of 30cm/sec to make a first crease in the laminated body. The laminated body with the first crease was unfolded, and a second crease was further made in the similar manner as for the first crease, so as to be perpendicular to the first crease. Besides, the laminated body was bent in such a direction that a side thereof coated with a coating agent was facing inside.

### (Oil resistance)

0.03 g of salad oil was dropped onto a coated surface of a laminated body (or onto an intersection of creases for a sample after bending). After 90 minutes, an area where salad oil had seeped onto the back surface was measured, and a degree of reduction in the seeped area was evaluated compared to a case where no bending resistance layer was provided. Besides, where no bending resistance layer was provided (Comparative example 1), a seeped area was 12.4 cm². In addition, in all Examples and Comparative examples, there was no seepage onto the back surface at all where no crease was made in the laminated body.

### (Moisture resistance)

A water vapor transmission rate (WVTR value, g/m²/day) of the laminated body obtained above was measured in accordance with JIS Z 0208-1976. Temperature and humidity conditions were set to a temperature of 40 ± 0.5°C and a relative humidity of 90 ± 2%. A degradation value of the water vapor transmission rate was calculated before and after bending, and a degree of reduction in the degradation value was evaluated in comparison to a case where no bending resistance layer was provided. Besides, where no bending resistance layer was provided (Comparative example 2), a water vapor transmission rate before bending was 25.6 g/m²/day, a water vapor transmission rate after bending was 56.6 g/m²/day, and a degradation value was 31.0 g/m²/day.

**Table 2**

| | | Bending resistance agent | Functional layer | Elongation degree of bending resistance agent |
|---|---|---|---|---|
| Example 1 | SUPERFLEX 460S, manufactured by DKS Co. Ltd. | Bending resistance agent 1 | Oil-resistant agent | 600% |
| Example 2 | DXA.4081, manufactured by Vanora AG | Bending resistance agent 3 | Oil-resistant agent | 270% |
| Example 3 | OKS-1009, manufactured by Mitsubishi Chemical Corporation | Bending resistance agent 5 | Oil-resistant agent | 310% |
| Example 4 | BVE8049Q, manufactured by Mitsubishi Chemical Corporation | Bending resistance agent 6 | Oil-resistant agent | 240% |
| Example 5 | SMARTEX VA-1015, manufactured by NIPPON A&L INC. | Bending resistance agent 8 | Oil-resistant agent | 300% |
| Example 6 | SUMIKAFLEX S-201HQ, manufactured by Sumika Chemtex Co., Ltd. | Bending resistance agent 10 | Oil-resistant agent | 600% |
| Example 7 | Arrowbase SE-1030N, manufactured by UNITIKA LTD. | Bending resistance agent 12 | Oil-resistant agent | 560% |
| Example 8 | SUPERFLEX 460S, manufactured by DKS Co. Ltd. | Bending resistance agent 1 | Moisture-proof coating agent | 600% |
| Example 9 | DXA.4081, manufactured by Vanora AG | Bending resistance agent 3 | Moisture-proof coating agent | 270% |
| Example 10 | OKS-1009, manufactured by Mitsubishi Chemical Corporation | Bending resistance agent 5 | Moisture-proof coating agent | 310% |
| Example 11 | BVE8049Q, manufactured by Mitsubishi Chemical Corporation | Bending resistance agent 6 | Moisture-proof coating agent | 240% |
| Example 12 | SMARTEX VA-1015, manufactured by NIPPON A&L INC. | Bending resistance agent 8 | Moisture-proof coating agent | 300% |
| Example 13 | SUMIKAFLEX S-201HQ, manufactured by Sumika Chemtex Co., Ltd. | Bending resistance agent 10 | Moisture-proof coating agent | 600% |
| Example 14 | Arrowbase SE-1030N, manufactured by UNITIKA LTD. | Bending resistance agent 12 | Moisture-proof coating agent | 560% |
| Comparative example 1 | SUPERFLEX 210, manufactured by DKS Co. Ltd. | Bending resistance agent 2 | Oil-resistant agent | <5% |
| Comparative example 2 | Neocryl A-1125, manufactured by Covestro AG | Bending resistance agent 4 | Oil-resistant agent | 130% |
| Comparative example 3 | OKS-8118, manufactured by Mitsubishi Chemical Corporation | Bending resistance agent 7 | Oil-resistant agent | 150% |
| Comparative example 4 | Nipol LX407S12, manufactured by Zeon Corporation | Bending resistance agent 9 | Oil-resistant agent | 190% |
| Comparative example 5 | SUMIKAFLEX SDX-5100, manufactured by Sumika Chemtex Co., Ltd. | Bending resistance agent 11 | Oil-resistant agent | 600% |
| Comparative example 6 | Arrowbase SD-1010, manufactured by UNITIKA LTD. | Bending resistance agent 13 | Oil-resistant agent | <5% |
| Comparative example 7 | SUPERFLEX 210, manufactured by DKS Co. Ltd. | Bending resistance agent 2 | Moisture-proof coating agent | <5% |
| Comparative example 8 | Neocryl A-1125, manufactured by Covestro AG | Bending resistance agent 4 | Moisture-proof coating agent | 130% |
| Comparative example 9 | OKS-8118, manufactured by Mitsubishi Chemical Corporation | Bending resistance agent 7 | Moisture-proof coating agent | 150% |
| Comparative example 10 | Nipol LX407S12, manufactured by Zeon Corporation | Bending resistance agent 9 | Moisture-proof coating agent | 190% |
| Comparative example 11 | SUMIKAFLEX SDX-5100, manufactured by Sumika Chemtex Co., Ltd. | Bending resistance agent 11 | Moisture-proof coating agent | 600% |
| Comparative example 12 | Arrowbase SD-1010, manufactured by UNITIKA LTD. | Bending resistance agent 13 | Moisture-proof coating agent | <5% |

| | | Shape restoration degree of bending resistance agent | Reduction rate of seepage of oil resistance | Reduction rate of degradation value of moisture resistance |
|---|---|---|---|---|
| Example 1 | SUPERFLEX 460S, manufactured by DKS Co. Ltd. | 97% | 98% | - |
| Example 2 | DXA.4081, manufactured by Vanora AG | 97% | 76% | - |
| Example 3 | OKS-1009, manufactured by Mitsubishi Chemical Corporation | 81% | 99% | - |
| Example 4 | BVE8049Q, manufactured by Mitsubishi Chemical Corporation | 83% | 89% | - |
| Example 5 | SMARTEX VA-1015, manufactured by NIPPON A&L INC. | 94% | 95% | - |
| Example 6 | SUMIKAFLEX S-201HQ, manufactured by Sumika Chemtex Co., Ltd. | 85% | 98% | - |
| Example 7 | Arrowbase SE-1030N, manufactured by UNITIKA LTD. | 80% | 91% | - |
| Example 8 | SUPERFLEX 460S, manufactured by DKS Co. Ltd. | 97% | - | 92% |
| Example 9 | DXA.4081, manufactured by Vanora AG | 97% | - | 80% |
| Example 10 | OKS-1009, manufactured by Mitsubishi Chemical Corporation | 81% | - | 99% |
| Example 11 | BVE8049Q, manufactured by Mitsubishi Chemical Corporation | 83% | - | 80% |
| Example 12 | SMARTEX VA-1015, manufactured by NIPPON A&L INC. | 94% | - | 88% |
| Example 13 | SUMIKAFLEX S-201HQ, manufactured by Sumika Chemtex Co., Ltd. | 85% | - | 99% |
| Example 14 | Arrowbase SE-1030N, manufactured by UNITIKA LTD. | 80% | - | 96% |
| Comparative example 1 | SUPERFLEX 210, manufactured by DKS Co. Ltd. | <5% | -3% | - |
| Comparative example 2 | Neocryl A-1125, manufactured by Covestro AG | <5% | 27% | - |
| Comparative example 3 | OKS-8118, manufactured by Mitsubishi Chemical Corporation | 58% | 29% | - |
| Comparative example 4 | Nipol LX407S12, manufactured by Zeon Corporation | 25% | 24% | - |
| Comparative example 5 | SUMIKAFLEX SDX-5100, manufactured by Sumika Chemtex Co., Ltd. | 70% | 10% | - |
| Comparative example 6 | Arrowbase SD-1010, manufactured by UNITIKA LTD. | <5% | 20% | - |
| Comparative example 7 | SUPERFLEX 210, manufactured by DKS Co. Ltd. | <5% | - | 16% |
| Comparative example 8 | Neocryl A-1125, manufactured by Covestro AG | <5% | - | -52% |
| Comparative example 9 | OKS-8118, manufactured by Mitsubishi Chemical Corporation | 58% | - | 86% |
| Comparative example 10 | Nipol LX407S12, manufactured by Zeon Corporation | 25% | - | 73% |
| Comparative example 11 | SUMIKAFLEX SDX-5100, manufactured by Sumika Chemtex Co., Ltd. | 70% | - | 60% |
| Comparative example 12 | Arrowbase SD-1010, manufactured by UNITIKA LTD. | <5% | - | 68% |

As shown in Table 2, it was found that the laminated body obtained using the bending resistance agents in Examples 1 to 14 of the present invention had less deterioration in functions of the functional layer before and after bending.

## Claims

1. A bending resistance agent that satisfies the following conditions 1 to 3, in a laminated body in which a paper base material layer, a bending resistance layer, and a functional layer are laminated in this order, for forming the bending resistance layer (excluding a case where the bending resistance agent is OKS-1009 and the functional layer is an active energy ray-curable ink composition layer).
(Condition 1)
The bending resistance agent comprises resin and a medium, and
a content of the resin (in terms of solid content) is 70 to 100% by mass in the bending resistance agent.
(Condition 2)
An elongation degree of the bending resistance layer in a tensile test, as calculated by the following equation, is 200% or more: $Elongation degree \left(%\right) = 100 \times \left(Lb-L0\right) / L 0 ,$ provided that Lb refers to a gauge length at break and L0 refers to a gauge length before the tensile test. The tensile test is a tensile test performed in accordance with JIS K 6251.
(Condition 3)
A shape restoration degree of the bending resistance layer, as calculated by the following equation, is 80% or more: $Shape restoration degree \left(%\right) = 100 \times \left(L1-L2\right) / \left(L1-L0\right) ,$ provided that L0 refers to a gauge length before the tensile test. L1 refers to a gauge length at 100% elongation degree in the tensile test, or a limit gauge length at which the layer does not break if it cannot be elongated to 100%. L2 is a gauge length of the bending resistance layer after an external force is removed following the tensile test, and the tensile test is a tensile test performed in accordance with JIS K 6251.

2. The bending resistance agent of claim 1, wherein the resin includes at least one selected from the group consisting of a polyurethane-based resin, an acryl-based resin, a polyester-based resin, a polyvinyl alcohol-based resin, a styrene-butadiene-based resin, a vinyl chloride-based resin, an ethylene-vinyl acetate copolymer-based resin, and a polyolefin-based resin.

3. The bending resistance agent of claim 1 or 2, wherein the functional layer includes at least any layer of a moisture-proof layer, a gas barrier layer, an oil-resistant layer, a water-resistant layer, or a water-repellent layer.

4. A laminated body in which a paper base material layer, a bending resistance layer, and a functional layer are laminated in this order, the bending resistance layer being a layer formed by being imparted with the bending resistance agent of claim 1 or 2.
